# EUROPEAN PATENT SPECIFICATION

(11) **EP 0 410 056 B1**
(45) Date of publication and mention of the grant of the patent: **30.11.1994**
(21) Application number: 89307714.9
(22) Date of filing: 28.07.1989
(51) Int. Cl.: H04B 10/08

(54) **Measurement of characteristics of broadcast optical networks**
Messung der Charakteristika eines optischen Rundfunknetzwerkes
Mesure de caractéristiques de réseaux optiques de diffusion

(43) Date of publication of application: 30.01.1991
(73) Proprietor: Hewlett-Packard Company, Palo Alto, California 94304 (US)
(72) Inventor: Walker, Stuart Douglas University of Essex, Colchester,Essex CO4 3 SQ (GB)
(74) Representative: Smith, Norman Ian

(56) References cited:
- US-A- 4 742 518
- IEEE MTT INTERNATIONAL MICROWAVE SYMPOSIUM DIGEST, 25th-27th May 1988, pages 901-903, IEEE, New York, US; R. OLSHANSKY et al.: "Microwave multiplexing techniques for wideband lightwave distribution networks"

## Description

This invention relates to measurement techniques which enable the performance of an optical transmission network to be assessed. The invention has particular application to networks which use sub-carrier multiplexing (SCM).

Sub-carrier multiplexed broadcast optical networks are of interest, because they offer a cost effective means of information transmission in local and larger area networks. In a sub-carrier multiplexing arrangement an optical carrier is intensity modulated by microwave sub-carriers. Data from each user or channel is used to modulate, for example, by ASK, PSK or FSK in the case of a digital system or by FM for analogue, a separate microwave frequency sub-carrier. The term "sub-carrier multiplexing" is generally used to refer to microwave sub-carriers and optical carriers and to distinguish them from optical frequency division multiplexing. At a receiver a high speed photodetector receives the sum of all transmitted subcarrier channels and the desired channel is selected with a microwave band pass filter or RF heterodyne receiver. The use of microwave subcarriers is described in IEEE MTT INTERNATIONAL MICROWAVE SYMPOSIUM DIGEST 25th-27th May 1988, pages 901-903, IEEE New York U.S.; R. Olshansky et al "Microwave multiplexing techniques for wideband lightwave distribution networks".

Investigations have shown that the components which go to make up a sub-carrier multiplex network suffer from non-linear effects which lead to distortion. The present invention is concerned with a measurement technique which enables the distortion in such a network to be evaluated. The overall distortion of such a network is made up of a number of contributions, typically from the up-and-down conversion mixers, laser drive, laser itself, the receiver and, in some instances, a laser amplifier.

Distortion measurement techniques are known in frequency division multiplex systems and operate by using standardised white noise generators. A white noise test signal is input at base band or at an intermediate frequency with a measurement slot created by a filter. Intermodulation products created by the channel are transmitted in the measurement slot and detected at a receiving terminal. This technique could be applied to SCM optical systems, but it provides little information regarding the distortion characteristics of individual system components. Additional difficulties are introduced when full band width loading is required as there is a need for an array of frequency up/down converters, each with white noise loading and appropriate tracking filter.

The present invention provides a measurement technique which does not suffer from these limitations.

According to a first aspect of the invention there is provided a method of measuring distorsion characteristics of an optical transmission network in which a test signal is applied to a device under test and the resulting output from the device is analysed, characterised in that the test signal is a psuedo-random binary sequence (PRBS) and that a spectral component of the sequence corresponding to a channel under investigation is removed prior to application of the sequence to the device under test.

According to a second aspect of the invention there is provided apparatus for measuring distorsion characteristics of an optical network which comprises means for applying a test signal to a device under test and means for analysing the resulting output from the device under test, characterised in that the test signal is a PRBS and the apparatus includes means for removing a spectral component of the sequence corresponding to the channel under investigation prior to application of the sequence to the device under test.

This present method relies on the discrete spectral nature of a PRBS. At any one of the given discrete frequencies present in the PRBS, a further contribution from system non-linearities can be introduced. The PRBS provides a test signal which comprises a large number of such frequencies and enables an assessment of an SCM network to be made which is more representative of real traffic than known arrangements.

The invention will be described now by way of example only, with particular reference to the accompanying drawings. In the drawings:
Figure 1 is a block schematic diagram of a measurement arrangement in accordance with the present invention;
Figure 2 illustrates the operation of the device of Figure 1,
Figure 3 shows a modification of the arrangement of Figure 1,
Figure 4 shows one example of a test apparatus in accordance with the present invention, and
Figure 5 shows results obtained from the apparatus of Figure 4.

A measurement arrangement in accordance with the present invention comprises a PRBS generator 10, which is driven by a clock generator 12. The output of the PRBS generator is applied to a device under test 14, via a circuit 16 which, as will be seen, can remove from the PRBS sequence a discrete spectral component. This component corresponds to the channel under test. The output of the PRBS generator is also applied to a phase locked loop system 18 which is used to generate a signal for cancelling the discrete spectral component. The phase locked loop is of conventional form and comprises a phase detector 20, a phase locked loop low pass filter 21, a voltage controlled oscillator 22 and a phase and amplitude adjustment element 24. The signal from the circuit 16 is applied to a spectrum analyser 26 and the signal from the device under test is applied to a spectrum analyser 28.

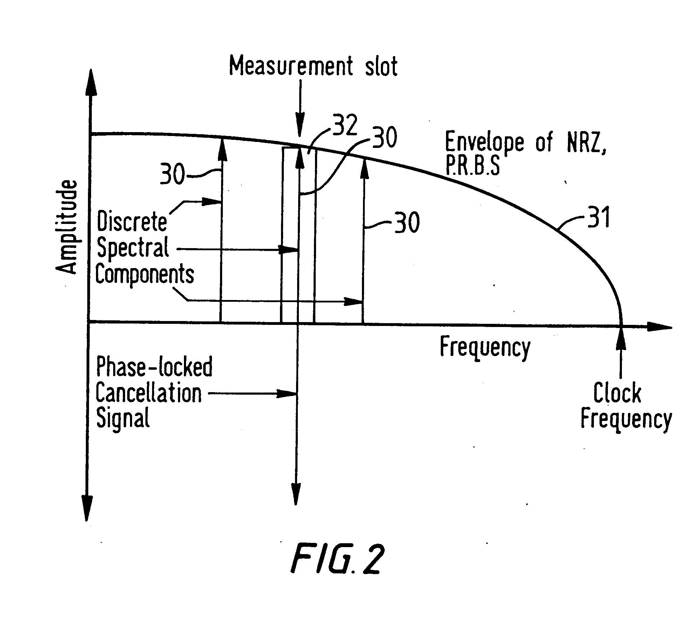

In use the test signal for evaluating the device under test 14 is generated by the PRBS generator. The phase locked loop operates to generate a cancellation signal which is applied to the element 16 to effectively cancel the component of the PRBS signal at the test frequency. This is required for accurate measurement since there should be no signal present at the test frequency prior to the non-linear element of the test. The method relies for it function on the discrete spectral nature of a PRBS. This is illustrated in Figure 2 of the drawings. As Figure 2 shows a PRBS is made up of a plurality of discrete spectral components 30 within an envelope 31. A measurement slot 32 is created corresponding to one of the components. In the measurement corresponding to one of the given discrete frequencies a further contribution from system non-linearities can be introduced. The test signal can be seen to comprise a large number of frequencies and these can be used to make a realistic assessment of the network non-linearity when it is operating with real traffic. A feature of the arrangement is the phase-locked extraction which, it can be seen, is acquired from the transmitted PRBS. This means that no separate reference signal is required and, hence, the method is very suitable for sub-carrier network assessment in field conditions. Additionally, because there is no requirement for a conducting transmission medium lock acquisition and cancellation signal injection may be applied to installed fibre systems with appropriate opto-electronic interfaces.

The PRBS can be extracted in an optical form from the SCM network and used to provide the appropriate phase-locked signal. Once a given PRBS spectral component has been selected, this component is cancelled by re-injection of the single frequency optical-signal by the phase amplitude and adjustment element 24. The spectrum analyser 22 is used to verify that this cancellation has occurred. The spectrum analyser 28 provides an indication of any non-linear effect by monitoring the signal emitted by the device under test.

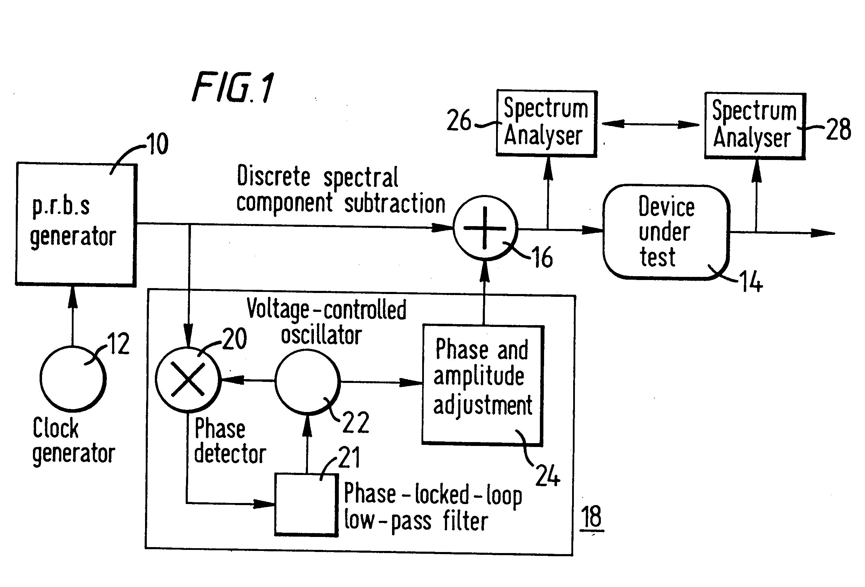

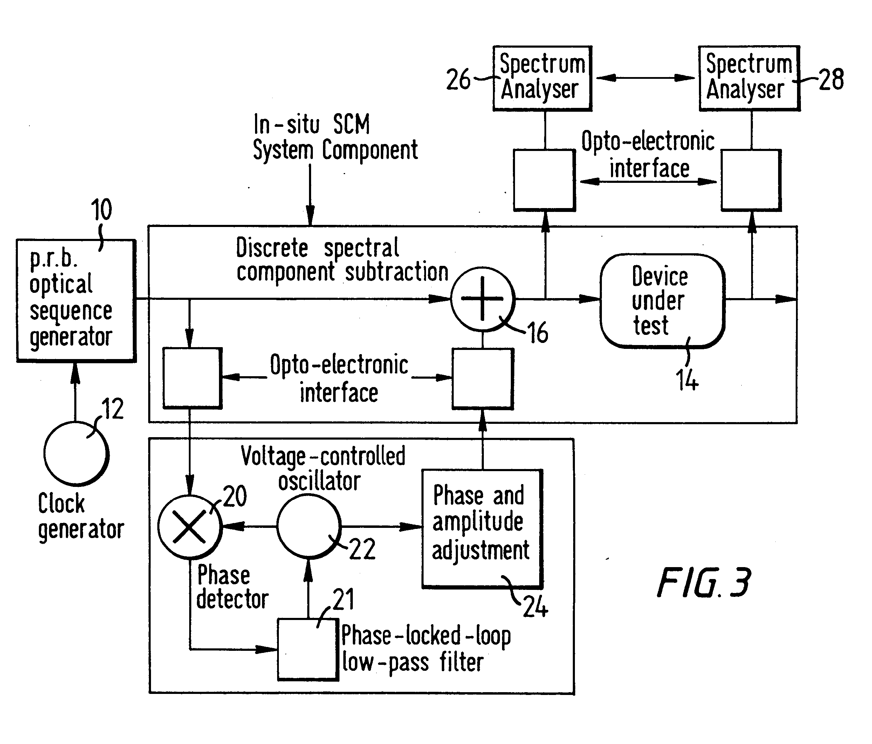

Figure 3 shows an arrangement corresponding to that of Figure 1 which includes opto-electronic interfaces 35 enabling the PRBS to be extracted in optical form.

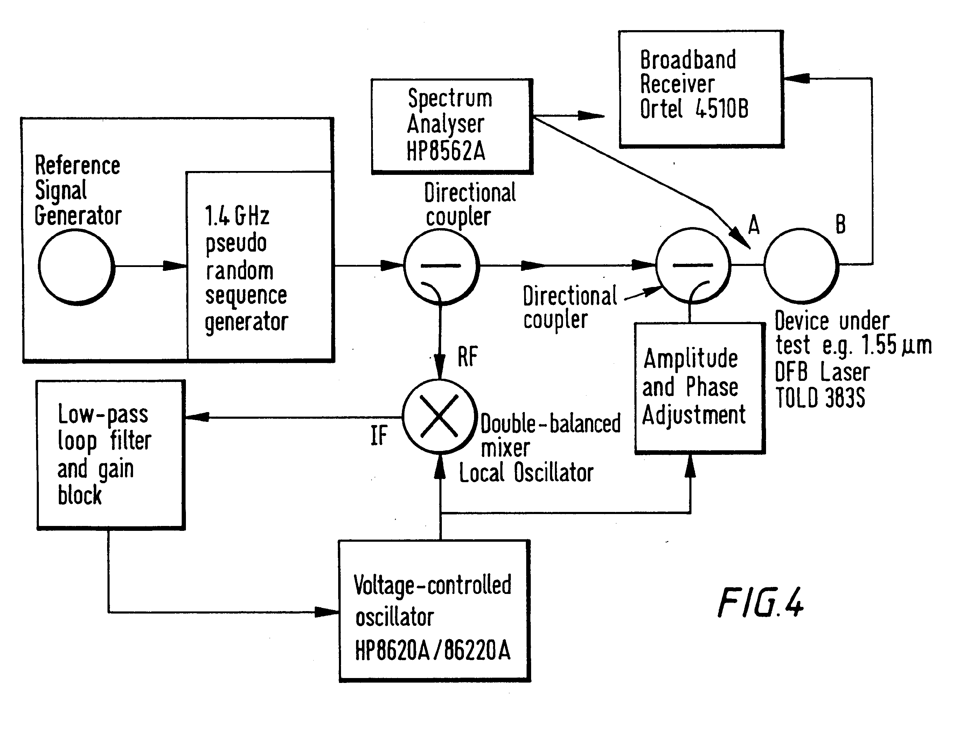

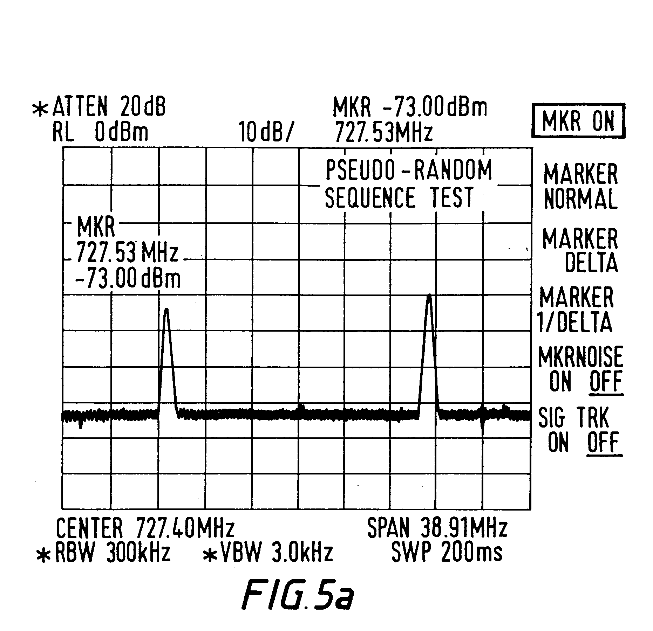

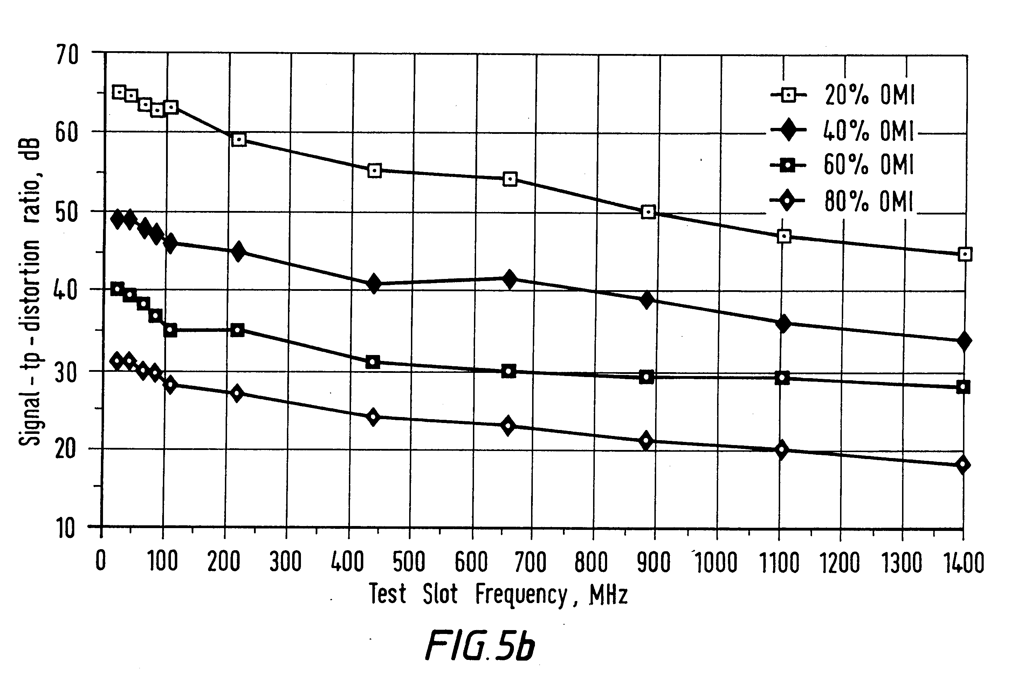

Figure 4 shows an example of a test apparatus used to carry out a preliminary distortion measurement on a packaged, tailed, isolated 1.55 µm DFB laser (Toshiba TOLD383S). The 1,4 GBit/s, NRZ, 2⁷-1, PRBS consists of 127 discrete spectral components at 11.024 MHz spacing within a 1.4 GHz bandwidth. For 0 dBm generator output level, the means power of each component is approximately 21dBm. The test signal was injected at point A and measurements carried out at B. Figure 5 is an illustrative spectrogram of a 1.4 GBit/s, 2⁷-1, NRZ, PRB test sequence segment with a 727.53 MHz component removed. Figure 5b shows the measured signal to distortion ratio over a 1.4 GHz frequency range with total optical modulation indices (OMI) ranging from 20-80%.

## Claims

1. A method of measuring distortion characteristics of an optical transmission network in which a test signal is applied to a device under test and the resulting output from the device is analysed, characterised in that the test signal is a pseudo-random binary sequence (PRBS) and that a spectral component of the sequence corresponding to a channel under investigation is removed prior to application of the sequence to the device under test.

2. A method according to claim 1 characterised in that said network is an SCM network.

3. A method according to claim 1 or claim 2 characterised in that the cancellation signal for removing the spectral component is generated using a phase locked loop circuit.

4. A method according to claim 3 characterised in that the PRBS is extracted in optical form from the SCM network in order to provide an appropriate phase locked signal.

5. Apparatus for measuring distorsion characteristics of an optical network which comprises means (10) for applying a test signal to a device (14) under test and means for analysing (28) the resulting output from the device under test, characterised in that the test signal is a PRBS and the apparatus includes means (18) for removing a spectral component of the sequence corresponding to the channel under investigation prior to application of the sequence to the device under test.

6. Apparatus according to claim 5 characterised in that the network is an SCM network.

7. Apparatus according to claim 5 or claim 6 characterised in that the means (18) for generating the cancellation signal comprises a phase locked loop circuit.

8. Apparatus according to claim 7 characterised in that the PRBS is extracted in optical form for application to the phase locked loop circuit (10).

## Patentansprüche

1. Ein Verfahren zum Messen von Verzerrungscharakteristika eines optischen Übertragungsnetzwerks, bei dem ein Testsignal an einen Prüfling angelegt wird und die resultierende Ausgabe des Prüflings analysiert wird, dadurch gekennzeichnet, daß das Testsignal eine pseudozufällige Binärfolge (PRBS) ist, und daß eine spektrale Komponente der Folge, die einem zu untersuchenden Kanal entspricht, vor der Anwendung der Folge auf den Prüfling entfernt wird.

2. Ein Verfahren gemäß Anspruch 1, dadurch gekennzeichnet, daß das Netzwerk ein SCM-Netzwerk ist.

3. Ein Verfahren gemäß Anspruch 1 oder Anspruch 2, dadurch gekennzeichnet, daß das Löschsignal für die Entfernung der spektralen Komponente unter Verwendung einer phasenstarren Schleifenschaltung erzeugt wird.

4. Ein Verfahren gemäß Anspruch 3, dadurch gekennzeichnet, daß die PRBS in einer optischen Form aus dem SCM-Netzwerk gewonnen wird, um ein geeignetes phasenstarres Signal zu liefern.

5. Vorrichtung zum Messen von Verzerrungscharakteristika eines optischen Netzwerks, das eine Einrichtung (10) zum Anlegen eines Testsignals an einen Prüfling (14) und eine Einrichtung zum Analysieren (28) der resultierenden Ausgabe des Prüflings aufweist, dadurch gekennzeichnet, daß das Testsignal eine PRBS ist, und daß die Vorrichtung eine Einrichtung (18) zum Entfernen einer spektralen Komponente der Folge, die dem zu untersuchenden Kanal entspricht, vor der Anwendung der Folge auf den Prüfling einschließt.

6. Vorrichtung gemäß Anspruch 5, dadurch gekennzeichnet, daß das Netzwerk ein SCM-Netzwerk ist.

7. Vorrichtung gemäß Anspruch 5 oder 6, dadurch gekennzeichnet, daß die Einrichtung (18) zum Erzeugen des Löschsignals eine phasenstarre Schleifenschaltung aufweist.

8. Vorrichtung gemäß Anspruch 7, dadurch gekennzeichnet, daß die PRBS in optischer Form zur Anwendung auf die phasenstarre Schleifenschaltung (10) gewonnen wird.

## Revendications

1. Procédé de mesure des caractéristiques de distorsion d'un réseau de transmission optique dans lequel un signal de test est appliqué à un dispositif en cours de test et la sortie résultante provenant du dispositif est analysée, caractérisé en ce que le signal de test est une séquence binaire pseudo-aléatoire (PRBS) et en ce qu'une composante spectrale de la séquence correspondant à un canal en cours d'examen est supprimée avant application de la séquence au dispositif en cours de test.

2. Procédé selon la revendication 1, caractérisé en ce que ledit réseau est un réseau SCM.

3. Procédé selon la revendication 1 ou la revendication 2, caractérisé en ce que le signal d'annulation pour supprimer la composante spectrale est généré en utilisant un circuit à boucle à verrouillage de phase.

4. Procédé selon la revendication 3, caractérisé en ce que la PRBS est extraite du réseau SCM sous forme optique afin de fournir un signal de verrouillage de phase approprié.

5. Appareil pour mesurer les caractéristiques de distorsion d'un réseau optique qui comporte un moyen (10) pour appliquer un signal de test à un dispositif (14) en cours de test et un moyen pour analyser (28) la sortie résultante provenant du dispositif en cours de test, caractérisé en ce que le signal de test est une PRBS et l'appareil comporte un moyen (18) pour supprimer une composante spectrale de la séquence correspondant à un canal en cours d'examen avant application de la séquence au dispositif en cours de test.

6. Appareil selon la revendication 5, caractérisé en ce que le réseau est un réseau SCM.

7. Appareil selon la revendication 5 ou la revendication 6, caractérisé en ce que le moyen (18) pour générer le signal d'annulation comporte un circuit à boucle à verrouillage de phase.

8. Appareil selon la revendication 7, caractérisé en ce que la PRBS est extraite sous forme optique pour être appliquée au circuit à boucle à verrouillage de phase (10).
